# EUROPÄISCHE PATENTSCHRIFT

(11) **EP 2 128 210 B1**
(45) Veröffentlichungstag und Bekanntmachung des Hinweises auf die Patenterteilung: **04.09.2013**
(21) Anmeldenummer: 08157103.6
(22) Anmeldetag: 28.05.2008
(51) Int. Cl.: C09J 5/02, C08L 63/00

(54) **Epoxidharz enthaltende Haftvermittlerzusammensetzung**
Adhesive compound containing epoxy resin
Composition d'agent adhésif contenant de la résine époxyde

(43) Veröffentlichungstag der Anmeldung: 02.12.2009
(73) Patentinhaber: Sika Technology AG, 6340 Baar (CH)
(72) Erfinder: Dohner, Reto, 8005 Zürich (CH); Schlumpf, Michael, 8143 Stallikon (CH); Diener, Andreas, 8636 Wald (CH); Huck, Wolf-Rüdiger, 8044 Zürich (CH)
(74) Vertreter: Sika Patent Attorneys

(56) Entgegenhaltungen:
- WO-A-2005/059056
- DE-A- 3 939 180
- DATABASE WPI Week 199303 Thomson Scientific, London, GB; AN 1993-021820 XP002500762 "Resin composition for sealing semiconductor" & JP 04 348059 A (SUMITOMO BAKELITE) 3. Dezember 1992 (1992-12-03)
- DATABASE WPI Week 199730 Thomson Scientific, London, GB; AN 1997-328514 XP002500763 "curing composition contains epoxy resin, protective aminogroup containing compound and silane modified epoxy rsin" & JP 09 132637 A (ASAHI DENKA) 20. Mai 1997 (1997-05-20)

## Beschreibung

### Technisches Gebiet

Die vorliegende Erfindung betrifft das Gebiet der Haftvermittler.

### Stand der Technik

Kleben ist eine breit eingesetzte Verbindungstechnologie. Aufgrund der grossen Anzahl von möglichen Substraten welche miteinander verklebt werden, gibt es immer wieder Substrate, welche mit gewissen Klebstoffen keine oder ungenügende Haftung aufbauen können. Um die Haftung von Klebstoffen und Dichtstoffen auf diesen Untergründen zu verbessern, wurden schon länger Haftvermittler, insbesondere Primern, eingesetzt.

JP 04 348 059 offenbart Zusammensetzungen die ein Merkaptosilan, ein Ureidosilan und ein Epoxidharz enthalten. Diese Zusammensetzungen werden verwendet zum versiegeln von Transistoren, IC und LSI.

Als Haftvermittler werden üblicherweise Silane, vielfach auch als Mischungen eingesetzt. Die im Stand der Technik offenbarten Haftvermittler weisen jedoch häufig Haftprobleme, insbesondere auf Glas und Glaskeramiken und insbesondere nach Wasserlagerung, auf.

### Darstellung der Erfindung

Aufgabe der vorliegenden Erfindung ist es daher, Haftvermittler zur Verfügung zu stellen, welche gute Haftungen von einkomponentigen feuchtigkeitshärtenden Polyurethanklebstoffen, insbesondere auf Glas und Glaskeramiken, und insbesondere nach Wasserlagerung, aufweisen.

Überraschenderweise wurde nun gefunden, dass die Zusammensetzungen gemäss Anspruch 1 diese Aufgabe lösen können.

Die Zusammensetzungen eignen sich insbesondere als Primer für einkomponentige feuchtigkeitshärtende Polyurethanklebstoffe und werden vorteilhaft für das Verkleben von Glas und Glaskeramik verwendet. Besonders geeignet haben sie sich im Einsatz als Primer zur Verglasung von Transportmitteln, insbesondere von Strassen- und Schienenfahrzeugen, gezeigt.

Weitere vorteilhafte Ausführungsformen der Erfindung sind Gegenstände von weiteren unabhängigen und abhängigen Ansprüchen.

### Wege zur Ausführung der Erfindung

Gegenstand der vorliegenden Erfindung sind Zusammensetzungen enthaltend mindestens ein Reaktionsprodukt, welches erhalten wird aus einer Reaktionsmischung umfassend:
i) mindestens ein Mercaptosilan **MS**;
   sowie
ii) mindestens ein Polysilan **PS**, welches insbesondere mindestens eine sekundäre oder tertiäre Aminogruppe, bevorzugt eine sekundäre Aminogruppe, aufweist;
   sowie
iii) mindestens ein Epoxidharz **EP**.

Mit dem Begriff "Organoalkoxysilan", beziehungsweise "Organoacyloxysilan", oder kurz "Silan" werden im vorliegenden Dokument Verbindungen bezeichnet, in denen zum einen mindestens eine, üblicherweise 2 oder 3, Alkoxygruppen, beziehungsweise Acyloxygruppen, direkt an das Silicium-Atom gebunden sind (über eine Si-O-Bindung), und die zum anderen mindestens einen direkt an das Silicium-Atom (über eine Si-C-Bindung) gebundenen organischen Rest aufweisen und keine Si-O-Si-Bindungen aufweisen. Entsprechend dazu bezeichnet der Begriff "Silangruppe" die an den organischen Rest des Organoalkoxysilans, beziehungsweise Organoacyloxysilans, gebundene Silicium-haltige Gruppe. Die Organoalkoxysilane oder Organoacyloxysilane, beziehungsweise deren Silangruppen, haben die Eigenschaft, bei Kontakt mit Feuchtigkeit zu hydrolysieren. Dabei bilden sich Organosilanole, das heisst Silicium-organische Verbindungen enthaltend eine oder mehrere Silanolgruppen (Si-OH-Gruppen) und, durch nachfolgende Kondensationsreaktionen, Organosiloxane, das heisst Silicium-organische Verbindungen enthaltend eine oder mehrere Siloxangruppen (Si-O-Si-Gruppen).

Silane, welche Amino-, Mercapto- beziehungsweise Oxirangruppen im ans Siliziumatom der Silangruppe gebundenen organischen Rest aufweisen, werden als "Aminosilane", "Mercaptosilane" beziehungsweise "Epoxysilane" bezeichnet. Ein primäres Aminosilan weist eine primäre Aminogruppe -NH₂ auf. Ein sekundäres Aminosilan weist eine sekundäre Aminogruppe -NH- auf. Ein tertiäres Aminosilan weist eine tertiäre Aminogruppe 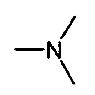 auf.

Mit "Poly" beginnende Substanznamen wie Polysilan, Polyol, Polyisocyanat, Polymercaptan oder Polyamin bezeichnen im vorliegenden Dokument Substanzen, die formal 2 oder mehr der in ihrem Namen vorkommenden funktionellen Gruppen pro Molekül enthalten.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Für die Herstellung der Reaktionsmischung geeignete Epoxidharze **EP** sind insbesondere Epoxidharze der Formel (I).

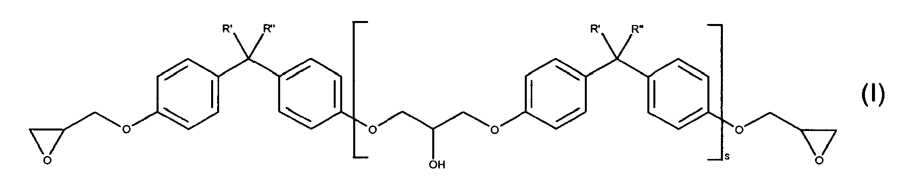

Hierbei stehen die Substituenten R' und R" unabhängig voneinander entweder für H oder CH₃. Der Index s steht für einen Wert von 0 bis 20.

Verbindungen der Formel (I) mit einem Index s von > 1.5, insbesondere von 2 bis 12 werden als Epoxid-Festharze bezeichnet. Derartige Epoxid-Festharze sind kommerziell erhältlich beispielsweise von Dow Chemical oder Huntsman oder Hexion, beispielsweise als D.E.R.™ 671 oder D.E.R.™ 692 (Dow) oder Araldite® GT 7071 (Huntsman).

Verbindungen der Formel (I) mit einem Index s zwischen 1 und 1.5 werden vom Fachmann als Semisolid-Epoxidharze bezeichnet. Für die hier vorliegende Erfindung werden sie ebenfalls als Epoxid-Festharze betrachtet. Bevorzugt sind jedoch Epoxid-Festharze im engeren Sinn, d.h. wo der Index s einen Wert von > 1.5 aufweist. Der Begriff "Epoxid-Festharz" ist dem Epoxid-Fachmann bestens bekannt und wird im Gegensatz zu "Epoxid-Flüssigharzen" verwendet. Die Glastemperatur von Epoxid-Festharzen liegt über Raumtemperatur, d.h. sie lassen sich bei Raumtemperatur zu schüttfähigen Pulvern oder Granulaten zerkleinern.

Verbindungen der Formel (I) mit einem Index s zwischen 0 bis 1 werden als Epoxid-Flüssigharze bezeichnet. Bevorzugt steht s für einen Wert von kleiner als 0.2.

Es handelt sich somit beispielsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Epoxid-Flüssigharze sind beispielsweise als Araldite® GY 250, Araldite® PY 304, Araldite® GY 282 (Huntsman) oder D.E.R.™ 331 oder D.E.R.™ 336 (Dow) oder D.E.R.™ 330 (Dow) oder Epikote 828 (Hexion) erhältlich.

Weiterhin geeignet als Epoxidharz **EP** sind sogenannte Novolake. Diese weisen insbesondere die folgende Formel auf: 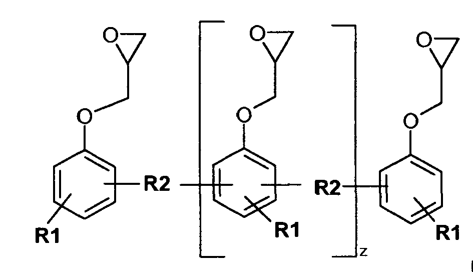 mit 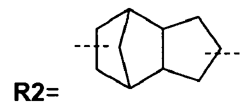 oder CH₂, **R1** = H oder Methyl und z = 0 bis 7. Die gestrichelten Linien in den Formeln dieses Dokumentes stellen jeweils die Bindung zwischen dem jeweiligen Substituenten und dem dazugehörigen Molekülrest dar.

Insbesondere handelt es sich hierbei um Phenol- oder Kresol-Novolake (**R2** = CH₂).

Solche Novolake sind unter dem Handelnamen EPN oder ECN sowie Tactix® von Huntsman oder unter der Produktereihe D.E.N™ von Dow Chemical kommerziell erhältlich.

Bevorzugt stellt das Epoxidharz **EP** ein Epoxid-Festharz der Formel (I) mit einem Index s von > 1.5, insbesondere von 2 bis 12, dar.

Es ist weiterhin von Vorteil, wenn das Epoxidharz **EP** ein Epoxid-Equivalenzgewicht (EEW) von 300 g/eq - 2000 g/eq, insbesondere 400 g/eq - 1000 g/eq, aufweist.

Der Gewichtsanteil des in der Reaktionsmischung eingesetzten Epoxidharzes **EP** beträgt vorteilhafterweise 15 - 70 Gew.-%, insbesondere 20 - 60 Gew.-%, bevorzugt 30 - 50 Gew.-%, am Gewicht der Reaktionsmischung.

Für die Herstellung der Reaktionsmischung geeignete Mercaptosilane **MS** weisen vorzugsweise die Formel (II) auf.

HS-R¹-Si(OR²)_{(3.c)}(R³)_{c} (II)

Hierbei steht R² unabhängig voneinander für eine Alkylgruppe mit 1 bis 4 C-Atomen oder eine Acylgruppe mit 1 bis 4 C-Atomen, bevorzugt für Methyl. Weiterhin stehen R³ unabhängig voneinander für H oder für eine Alkylgruppe mit 1 bis 10 C-Atomen und R¹ für eine lineare oder verzweigte Alkylengruppe mit 1 bis 6 C-Atomen, insbesondere für Propylen, und c für einen Wert von 0, 1 oder 2, bevorzugt 0.

Als Mercaptosilane **MS** sind insbesondere geeignet Mercaptosilane welche ausgewählt sind aus der Gruppe bestehend aus Mercaptomethyl-trimethoxysilan, Mercaptomethyl-triethoxysilan, Mercaptomethyl-dimethoxymethylsilan, Mercaptomethyl-diethoxymethylsilan, 3-Mercaptopropyl-trimethoxysilan, 3-Mercaptopropyl-triethoxysilan, 3-Mercaptopropyl-triisopropoxysilan, 3-Mercaptopropyl-methoxy(1,2-ethylendioxy)-silan, 3-Mercaptopropyl-methoxy-(1,2-propylendioxy)-silan, 3-Mercaptopropyl-ethoxy(1,2-propylendioxy)-silan, 3-Mercaptopropyl-dimethoxymethylsilan, 3-Mercaptopropyl-diethoxymethylsilan, 3-Mercapto-2-methylpropyl-trimethoxysilan und 4-Mercapto-3,3-dimethylbutyl-trimethoxysilan.

Als Mercaptosilane **MS** sind 3-Mercaptopropyl-trimethoxysilan und 3-Mercaptopropyl-triethoxysilan, insbesondere 3-Mercaptopropyl-trimethoxysilan, bevorzugt.

Als Polysilan **PS** ist in einer ersten Ausführungsform ein Polysilan **PS1** geeignet, welches mindestens eine sekundäre oder tertiäre Aminogruppe aufweist. In einer zweiten Ausführungsform ist ein Polysilan **PS2** geeignet, welches erhältlich ist aus einer Reaktion eines Aminosilans oder Mercaptosilans mit einem Polyisocyanat oder mit einem Isocyanatgruppen aufweisenden Polyurethanpolymer.

Das Polysilan **PS1** weist mindestens eine sekundäre oder tertiäre Aminogruppe, insbesondere eine sekundäre Aminogruppe auf. Insbesondere geeignet sind Aminosilane der Formel (III).

R⁴⁅Si(OR⁵)₍₃₋ₐ₎(R⁶)ₐ]ₙ (III)

Hierbei steht R⁴ für einen n-wertigen organischen Rest mit mindestens einer sekundären oder tertiären Aminogruppe. R⁵ steht unabhängig voneinander für eine Alkylgruppe mit 1 bis 4 C-Atomen oder eine Acylgruppe mit 1 bis 4 C-Atomen. Der Index a steht für einen Wert von 0, 1 oder 2. Weiterhin steht R⁶ unabhängig voneinander für H oder für eine Alkylgruppe mit 1 bis 10 C-Atomen und n steht für einen Wert von 2, 3 oder 4. Besonders bevorzugt steht n für 2 oder 3, d.h. vorzugsweise weist das Polysilan **PS1** 2 oder 3 Silangruppen auf. Bevorzugt werden Polysilane **PS1** mit 2 Silangruppen. Es werden Polysilane **PS1** mit a = 0 bevorzugt. Als R⁵ werden Methyl-, Ethyl-, Propyl- und Butylgruppen sowie deren Stellungsisomere bevorzugt. Meist bevorzugt ist R⁵ eine Methylgruppe.

Einerseits werden als Polysilane **PS1** Polysilane mit der Formel (IV) bevorzugt.

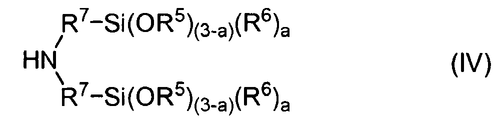

Hierbei steht R⁷ für eine lineare oder verzweigte Alkylengruppe mit 1 bis 6 C-Atomen, insbesondere für eine Propylengruppe.

Als besonders bevorzugte Polysilane **PS1** gelten Bis(3-trimethoxysilylpropyl)amin und Bis(3-triethoxysilylpropyl)amin. Als meist bevorzugtes Polysilan **PS1** gilt Bis(3-trimethoxysilylpropyl)amin.

Andererseits bevorzugte Polysilane **PS1** sind Polysilane, welche mindestens ein Strukturelement der Formel (V) oder (VI), insbesondere der Formel (V-1) oder (VI-1), aufweisen.

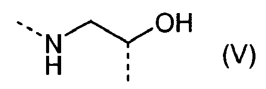

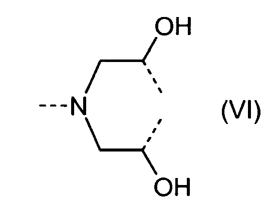

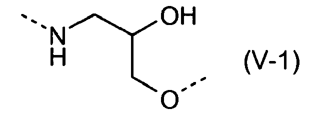

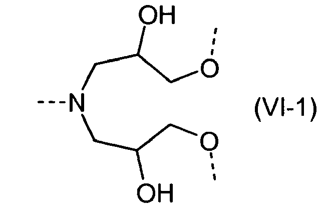

Derartige Polysilane **PS1** der Formel V und VI, beziehungsweise V-1 und VI-1, lassen sich über Reaktionen von primären oder sekundären Aminen mit Epoxiden, beziehungsweise mit Glycidylethern, herstellen. Die Silangruppen können sowohl vom Amin oder vom Epoxid, beziehungsweise vom Glycidylether, stammen.

Derartige Polysilane **PS1** sind einerseits beispielsweise die Reaktionsprodukte aus 3-Aminopropyltrimethoxysilan oder Bis(3-trimethoxysilylpropyl)amin mit Bisphenol-A-Diglycidylether oder Hexandiol-Diglycidylether.

Derartige Polysilane **PS1** sind andererseits beispielsweise Reaktionsprodukte aus einem Epoxysilan der Formel (VII) mit einem Aminosilan der Formel (VIII).

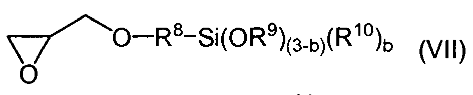

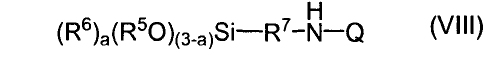

Hierbei steht R⁹ unabhängig voneinander für eine Alkylgruppe mit 1 bis 4 C-Atomen oder eine Acylgruppe mit 1 bis 4 C-Atomen. Bevorzugt steht R⁹ für eine Methylgruppe. R¹⁰ steht unabhängig voneinander für H oder für eine Alkylgruppe mit 1 bis 10 C-Atomen. R⁷ und R⁸ stehen unabhängig voneinander je für eine lineare oder verzweigte Alkylengruppe mit 1 bis 6 C-Atomen, insbesondere für Propylen. Q steht für H oder für einen Alkyl-, Cycloalkyl- oder Arylrest mit 1 bis 20 C-Atomen oder einen Rest der Formel -(CH₂-CH₂-NH)_{d}H oder für einen Rest der Formel -R⁷-Si(OR⁵)₍₃₋ₐ₎(R⁶)ₐ. Der Indizes b steht für einen Wert von 0, 1 oder 2, bevorzugt für 0. Der Indizes d steht für einen Wert von 1 oder 2.

R⁶, R⁵ und a weisen die bereits für Formel (III) beschriebenen Bedeutungen auf.

Derartige Polysilane **PS1** können eine Struktur der Formel (IX) aufweisen.

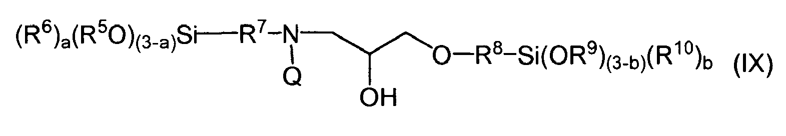

Besonders bevorzugt als Polysilan **PS1,** welches mindestens eine sekundäre oder tertiäre Aminogruppe aufweist, sind Reaktionsprodukte von 3-Aminopropyltrimethoxysilan oder Bis(3-trimethoxysilylpropyl)amin und 3-Glycidyloxypropyltrimethoxysilan.

Als Polysilane **PS2** sind insbesondere Polysilane geeignet, welche aus der Reaktion mindestens eines Aminosilans oder Mercaptosilans der Formel (X) mit mindestens einem Polyisocyanat oder mit mindestens einem Isocyanatgruppen aufweisenden Polyurethanpolymer erhalten werden. Derartige Polysilane **PS2** weisen insbesondere die Formel (XI) auf.

(R⁶)ₐ(R⁵O)₍₃₋ₐ₎Si-R⁷-YH (X)

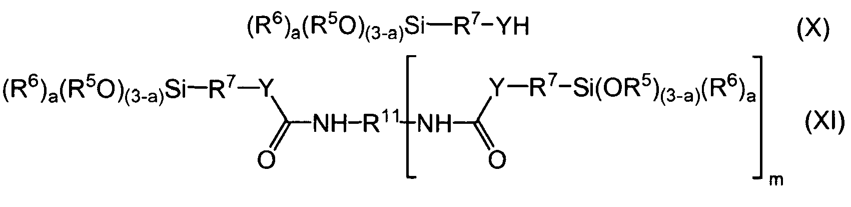

Hierbei steht Y für NQ oder S. Weiterhin steht R¹¹ für ein Polyisocyanat oder Isocyanatgruppen aufweisendes Polyurethanpolymer nach Entfernung von m NCO-Gruppen und m für einen Wert von 1, 2 oder 3, insbesondere für 1 oder 2.

Besonders geeignet als Aminosilane der Formel (X) sind Aminosilane mit primären Aminogruppen welche ausgewählt sind aus der Gruppe bestehend aus 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan und Aminomethyl-methoxydimethylsilan. Bevorzugt sind 3-Aminopropyl-trimethoxysilan und 3-Aminopropyl-methyldimethoxysilan.

Als Aminosilane der Formel (X) können, obwohl sie langsamer in der Reaktion sind, auch Aminosilane mit sekundären Aminogruppen verwendet werden. Besonders geeignet sind Aminosilane mit sekundären Aminogruppen welche ausgewählt sind aus der Gruppe bestehend aus N-Methyl-3-Aminopropyl-trimethoxysilan, N-Ethyl-3-Aminopropyl-trimethoxysilan, N-Butyl-3-Aminopropyl-trimethoxysilan, N-Cyclohexyl-3-Aminopropyl-trimethoxysilan, N-Phenyl-3-Aminopropyl-trimethoxysilan, N-Methyl-3-Amino-2-methylpropyl-trimethoxysilan, N-Ethyl-3-Amino-2-methylpropyl-trimethoxysilan; N-Ethyl-3-Aminopropyl-dimethoxymethylsilan, N-Phenyl-4-Aminobutyl-trimethoxysilan, N-Phenylaminomethyl-dimethoxymethylsilan, N-Cyclohexyl-aminomethyl-dimethoxymethylsilan, N-Methyl-aminomethyl-dimethoxymethylsilan, N-Ethyl-aminomethyl-dimethoxymethylsilan, N-Propyl-aminomethyl-dimethoxymethylsilan, N-Butyl-aminomethyl-dimethoxymethylsilan; N-(2-Aminoethyl)-3-aminopropyl-trimethoxysilan, 3-[2-(2-Aminoethylamino)-ethylamino]-propyl-trimethoxysilan, N-(2-Aminoethyl)-3-aminopropyl-methyldimethoxysilan, 3-[2-(2-Aminoethylamino)-ethylamino]-propyl-methyldimethoxysilan, Bis(3-trimethoxysilylpropyl)amin und Bis(3-triethoxysilylpropyl)amin.

Bevorzugte Aminosilane der Formel (X) mit sekundären Aminogruppen sind N-Butyl-3-Aminopropyl-trimethoxysilan, N-Methyl-3-Aminopropyl-trimethoxysilan, N-Phenyl-3-Aminopropyl-trimethoxysilan oder Bis(3-trimethoxy-silylpropyl)amin.

Als Mercaptosilane der Formel (X) sind insbesondere die vorhergehend erwähnten Mercaptosilane **MS** geeignet.

Als Polyisocyanate sind insbesondere Diisocyanate oder Triisocyanate geeignet. Bevorzugt sind kommerziell erhältliche Polyisocyanate, wie beispielsweise 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Di-isocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), sowie beliebige Mischungen der vorgenannten Isocyanate und deren Biurete oder deren Isocyanurate. Besonders bevorzugt sind MDI, TDI, HDI und IPDI und deren Biurete oder Isocyanurate.

Isocyanatgruppen aufweisende Polyurethanpolymere lassen sich insbesondere aus den gerade genannten Polyisocyanaten und Polyolen und/oder Polyaminen, wie sie in der Patentschrift US 2006/0122352 A1 in den Abschnitten [0029] bis [0041] und [0043] bis [0044] offenbart sind und deren Inhalt insbesondere hiermit durch Bezugnahme eingeschlossen wird, nach bekannter Art und Weise erhalten.

Als Polysilan **PS** ist ein Polysilan der Formel (IV) bevorzugt, meist bevorzugt ist das Polysilan **PS** ein Bis(3-trimethoxysilylpropyl)amin oder Bis(3-triethoxysilylpropyl)amin.

Das in der Zusammensetzung enthaltende Reaktionsprodukt wird erhalten aus einer Reaktionsmischung umfassend mindestens ein Mercaptosilan **MS,** mindestens ein Polysilan **PS** und mindestens ein Epoxidharz **EP.** Da die ablaufenden Reaktionen zum Teil sehr komplex sind ist eine Angabe der in der Reaktionsmischung genau gebildeten Strukturen schwierig. Typischerweise entstehen hierbei Strukturelemente der Formel (XII) und (XIII).

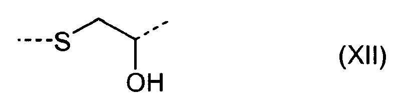

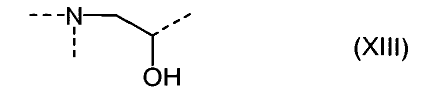

Diese Strukturelemente der Formeln (XII) und (XIII) können auch gleichzeitig vorhanden sein.

Vorzugsweise ist das Verhältnis der Anzahl der in der Reaktionsmischung eingesetzten Epoxidgruppen zu der Summe der Anzahl der in der Reaktionsmischung eingesetzten Mercapto- und Aminogruppen ≦ 1.

Weiterhin ist das Verhältnis der Anzahl der in der Reaktionsmischung eingesetzten Silangruppen der Mercaptosilane **MS** zu der Anzahl der in der Reaktionsmischung eingesetzten Silangruppen des Polysilans **PS** von 0.05-5, insbesondere von 0.1 - 2 bevorzugt von 0.2 - 1.

Weiterhin ist das molare Verhältnis aller in der Reaktionsmischung eingesetzten Mercaptosilane **MS** zu allen in der Reaktionsmischung eingesetzten Polysilane **PS** von 0.1-10, insbesondere von 0.3 - 5, bevorzugt von 0.5 - 2.

Die Zusammensetzung kann zusätzlich mindestens einen Haftvermittler, insbesondere mindestens ein Silan oder mindestens eine Organo-Titanverbindung, enthalten.

Als Silan als Haftvermittler eignet sich typischerweise ein Aminosilan **AS,** welche mindestens eine primäre oder sekundäre Aminogruppe aufweist.

Insbesondere handelt es sich bei dem Aminosilan **AS,** welches mindestens eine primäre oder sekundäre Aminogruppe aufweist, um primäre oder sekundäre Aminosilane, wie sie vorgehend als geeignete Aminosilane der Formel (X) bereit erwähnt wurden.

Weiterhin als Haftvermittler sind Aminosilane mit tertiären Aminogruppen geeignet, beispielsweise Tris-[3-(trimethoxysilyl)-propyl]-amin oder Tris-[3-(triethoxysilyl)-propyl]-amin.

Als Haftvermittler weiter bevorzugte Aminosilane sind N-(2-Aminoethyl)-3-aminopropyl-trimethoxysilan sowie Bis(3-trimethoxysilylpropyl)amin.

Auch Epoxysilane, (Meth)acrylatosilane oder Alklysilane oder Vinylsilane, insbesondere 3-Glycidyloxypropyltrimethoxysilan, 3-Glycidyloxypropyltriethoxysilan, 3-(Meth)acryloxypropyltriethoxysilan, 3-(Meth)acryloxypropyltrimethoxysilan, Vinyltrimethoxysilan und Vinyltriethoxysilan, können als Haftvermittler verwendet werden.

Die Organo-Titanverbindung als Haftvermittler weist hierbei mindestens einen über eine Sauerstoff-Titan-Bindung an das Titanatom gebundenen Substituenten auf.

Als über eine Sauerstoff-Titan-Bindung an das Titanatom gebundenen Substituenten sind besonders geeignete Substituenten diejenigen, welche aus der Gruppe bestehend aus Alkoxygruppe, Sulfonatgruppe, Carboxylatgruppe, Dialkylphosphatgruppe, Dialkylpyrophosphatgruppe und Acetylacetonatgruppe ausgewählt sind.

Besonders geeignet sind Verbindungen, bei denen alle an das Titan gebundene Substituenten aus der Gruppe bestehend aus Alkoxygruppe, Sulfonatgruppe, Carboxylatgruppe, Dialkylphosphatgruppe, Dialkylpyrophosphatgruppe und Acetylacetonatgruppe ausgewählt sind, wobei alle Substituenten identisch oder verschieden von einander sein können.

Als Alkoxygruppen haben sich insbesondere sogenannte Neoalkoxy-Substituenten, insbesondere der folgenden Formel (XIV), besonders geeignet erwiesen.

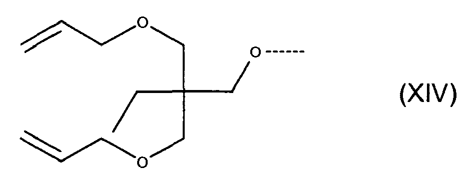

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der folgenden Formel (XV)

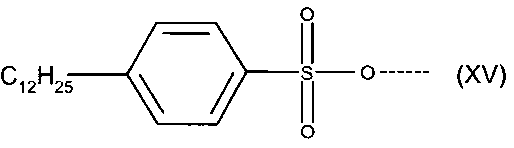

Besonders geeignet als Carboxylatgruppen haben sich insbesondere Carboxylate von Fettsäuren erwiesen. Als bevorzugte Carboxylate gilt Decanoat.

Organo-Titanverbindungen sind kommerziell erhältlich, beispielsweise bei der Firma Kenrich Petrochemicals oder DuPont. Beispiele für geeignete Organo-Titanverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA 01, LICA 09, LICA 12, LICA 38, LICA 44, LICA 97, LICA 99, KR OPPR, KR OPP2 von Kenrich Petrochemicals oder Tyzor ® ET, TBT, TOT TPT, NPT, BTM, AA, AA-75, AA-95, AA-1 05, TE, ETAM, OGT von DuPont.

Als bevorzugt gelten Ken-React® KR 7, KR 9S, KR 12, KR 26S, KR 38S, KR44, LICA 09, LICA 44, NZ 44, sowie Tyzor® ET, TBT, TOT, TPT, NPT, BTM, AA, AA-75, AA-95, AA-105, TE, ETAM, OGT von DuPont. Besonders bevorzugt sind Tyzor® TBT und Tyzor® OGT.

Es ist dem Fachmann klar, dass diese Organo-Titanverbindungen unter dem Einfluss von Wasser hydrolysieren und an das Ti-Atom gebundene OH-Gruppen bilden. Derartige hydrolysierte, beziehungsweise teilhydrolysierte, Organo-Titanverbindungen können dann ihrerseits kondensieren und Kondensationsprodukte bilden, welche Ti-O-Ti Bindungen aufweisen. Sind Silane und/oder Titanate als Haftvermittler gemischt, sind auch gemischte Kondensationsprodukte möglich, welche Si-O-Ti Bindungen aufweisen. Ein geringer Anteil an derartigen Kondensationsprodukten ist möglich, insbesondere wenn sie löslich, emulgierbar oder dispergierbar sind.

Typischerweise enthält die Zusammensetzung mindestens ein Silan oder eine Organo-Titanverbindung als Haftvermittler, insbesondere in einer Menge von 0.1 - 10 Gew.-%, bevorzugt von 1- 5 Gew.-%, bezogen auf das Gewicht der Zusammensetzung.

Es hat sich als vorteilhaft erwiesen, wenn die Zusammensetzung mindestens ein Lösungsmittel, insbesondere mindestens ein organisches Lösungsmittel enthält. Als derartige organische Lösungsmittel eignen sich insbesondere Kohlenwasserstoffe oder Ketone oder Carbonsäureester oder Alkohole. Bevorzugte Beispiele hierfür sind Toluol, Xylol, Hexan, Heptan, Methylethylketon, Aceton, Butylacetat, Ethylacetat, Ethanol, Isopropanol, Methanol. Besonders bevorzugt sind Hexan, Heptan, Methylethylketon, Aceton, Butylacetat, Ethylacetat, Ethanol, Isopropanol, Methanol.

Weiterhin gibt es spezifische Ausführungsformen, in denen auch Wasser als Lösungsmittel, allenfalls in Abmischung mit einem organischen Lösungsmittel, geeignet ist.

Das Lösungsmittel wird insbesondere in einer Menge von 40 - 99 Gew.-%, insbesondere von 60 - 95 Gew.-%, bezogen auf das Gewicht der Zusammensetzung, eingesetzt.

Die Zusammensetzung kann gegebenenfalls weitere Bestandteile aufweisen. Derartige weitere Bestandteile sollten jedoch die Lagerstabilität der Zusammensetzung nicht beeinträchtigen. Weitere Bestandteile sind beispielsweise Katalysatoren, Lumineszenzindikatoren wie Uvitex® OB von Ciba Specialty Chemicals, Stabilisatoren, Tenside, Säuren, Farbstoffe und Pigmente.

Bevorzugterweise enthält die Zusammensetzung oder besteht die Zusammensetzung aus einem Epoxidharz **EP**, insbesondere einem Epoxid-Festharz der Formel (I), in einer Menge von 2 - 10 Gew.-% bezogen auf das Gesamtgewicht der Zusammensetzung und einem Mercaptosilan **MS**, insbesondere 3-Mercaptopropyl-trimethoxysilan, in einer Menge von 1 - 10 Gew.-% bezogen auf das Gesamtgewicht der Zusammensetzung und einem Polysilan **PS**, insbesondere Bis(3-trimethoxysilylpropyl)amin, in einer Menge von 1 - 10 Gew.-% bezogen auf das Gesamtgewicht der Zusammensetzung und einem Lösungsmittel, insbesondere Ethylacetat, in einer Menge von 60 - 95 Gew.-% bezogen auf das Gesamtgewicht der Zusammensetzung.

Die Zusammensetzung eignet sich ausgezeichnet als Haftvermittler und kann breit eingesetzt werden. Insbesondere kann sie als Primer oder als Primerbestandteil eingesetzt werden. Unter einem Primer wird ein Voranstrich verstanden, welcher auf eine Oberfläche appliziert wird und nach einer gewissen Wartezeit nach der Applikation, der so genannten Ablüftezeit von einem Kleb- oder Dichtstoff oder einer Beschichtung überdeckt wird und dazu dient die Haftung des Klebstoffs oder Dichtstoffs oder der Beschichtung auf der betreffenden Substratoberfläche zu verbessern.

Die Zusammensetzung eignet sich darum zur Verwendung als Haftvoranstrich für ein Substrat **S1,** insbesondere handelt es sich bei dem Substrat **S1** um Glas oder Glaskeramik.

Die Zusammensetzung kann jedoch auch als Haftvermittler in einem Klebstoff oder Dichtstoff oder einer Beschichtung verwendet werden. Insbesondere geeignet ist der Einsatz in einem Klebstoff oder Dichtstoff.

Für die Anwendung der Zusammensetzung als Haftvermittler gibt es unterschiedliche Möglichkeiten der Anwendung:

In einem ersten Verfahren des Verklebens oder Abdichtens von zwei Substraten **S1** und **S2** umfasst es mindestens die folgenden Schritte
a) Applizieren einer Zusammensetzung wie sie vorhergehend beschrieben wurde auf ein erstes Substrat **S1**
b) Applizieren eines Klebstoffs oder Dichtstoffs auf die abgelüftete nach Schritt a) applizierte Zusammensetzung
c) Kontaktieren des Klebstoffs oder Dichtstoffs mit einem zweiten Substrat **S2;**

In einem zweiten Verfahren des Verklebens oder Abdichtens von zwei Substraten **S1** und **S2** umfasst es mindestens die folgenden Schritte
a') Applizieren einer Zusammensetzung wie sie vorhergehend beschrieben wurde auf ein erstes Substrat **S1**
b') Applikation eines Klebstoffs oder Dichtstoffs auf die Oberfläche eines zweiten Substrates **S2**
c') Kontaktieren des Klebstoffs oder Dichtstoffs mit der abgelüfteten Zusammensetzung, welche sich auf dem Substrat **S1** befindet;

In einem dritten Verfahren des Verklebens oder Abdichtens von zwei Substraten **S1** und **S2** umfasst es mindestens die folgenden Schritte
a") Applizieren einer Zusammensetzung wie sie vorhergehend beschrieben wurde auf ein erstes Substrat **S1**
b") Applizieren eines Klebstoffs oder Dichtstoffs auf das erste Substrat **S1** und zweite Substrat **S2,** auf welche zumindest eines davon nach Schritt a") eine Zusammensetzung appliziert worden ist
c") Kontaktieren der applizierten Klebstoffe oder Dichtstoffe miteinander unter Fügen der Substratteile zu einem Klebverbund oder Dichtverbund;

In einem vierten Verfahren des Verklebens oder Abdichtens von zwei Substraten **S1** und **S2** umfasst es mindestens die folgenden Schritte
a''') Applizieren einer Zusammensetzung wie sie vorhergehend beschrieben wurde auf ein erstes Substrat **S1**
b''') Ablüften der Zusammensetzung
c''') Applikation eines Klebstoffs oder Dichtstoffs zwischen die Oberflächen des Substrates **S1** und **S2**.

In all diesen vier Möglichkeiten besteht das zweite Substrat **S2** aus demselben oder unterschiedlichem Material wie das Substrat **S1**.

Nach dem Schritt c), c'), c") oder c''') schliesst sich typischerweise ein Schritt des Aushärtens des Klebstoffs oder Dichtstoffs an. Der Fachmann versteht, dass je nach verwendetem System und Reaktivität des Klebstoffes Vernetzungsreaktionen, und damit bereits das Aushärten, bereits während der Applikation beginnen kann. Der Hauptteil der Vernetzung und damit im engeren Sinn des Terms das Aushärten findet jedoch nach der Applikation statt, ansonsten sich nämlich auch Probleme mit dem Aufbau der Haftung zur Substratoberfläche ergeben.

Insbesondere ist zumindest eines der Substrate **S1** oder **S2** Glas oder Glaskeramik. Insbesondere handelt es sich bei einem Substrat um Glas oder Glaskeramik und beim anderen Substrat um einen Lack oder ein lackiertes Metall oder ein lackierte Metalllegierung. Somit ist das Substrat **S1**, respektive **S2,** Glas oder Glaskeramik und das Substrat **S2,** respektive **S1**, ein Lack oder ein lackiertes Metall oder eine lackierte Metalllegierung.

Klebstoffe oder Dichtstoffe können ein- oder zweikomponentige Klebstoffe oder Dichtstoffe sein.

Geeignete einkomponentige Klebstoffe oder Dichtstoffe enthalten insbesondere feuchtigkeitshärtende Isocyanatgruppen-terminierte Polymere. Solche Klebstoffe oder Dichtstoffe vernetzen unter dem Einfluss von Wasser, insbesondere von Luftfeuchtigkeit. Beispiele für solche einkomponentige feuchtigkeitshärtende Polyurethanklebstoffe sind solche aus der SikaFlex®- und SikaTack®- Produktelinie, wie sie von Sika Schweiz AG kommerziell erhältlich sind.

Die oben erwähnten Isocyanat-terminierten Polymeren werden aus Polyolen, insbesondere Polyoxyalkylenpolyolen, und Polyisocyanaten, insbesondere Diisocyanaten, hergestellt.

Geeignet als zweikomponentige Klebstoffe oder Dichtstoffe sind zweikomponentige Polyurethan-Klebstoffe oder -Dichtstoffe, deren erste Komponente ein Amin- oder ein Polyol umfassen und deren zweite Komponente eine NCO-haltiges Polymer oder ein Polyisocyanat umfassen. Beispiele für solche zweikomponentige raumtemperaturhärtende Polyurethanklebstoffe sind solche aus der SikaForce® -Produktelinie, wie sie von Sika Schweiz AG kommerziell erhältlich sind.

Es hat sich gezeigt, dass insbesondere bei feuchtigkeitshärtenden Polyurethan-Klebstoffen oder -Dichtstoffen eine starke Verbesserung der Haftung, insbesondere auf Glas und Glaskeramiken und insbesondere nach Wasserlagerung, unter Verwendung der beschriebenen Zusammensetzung erreicht werden kann.

Diese Kleb- und Abdichtverfahren finden insbesondere in der Herstellung von Artikeln, insbesondere von Transportmittel, Anwendung. Derartige Artikel stellen insbesondere Automobile, Busse, Lastkraftwagen, Schienenfahrzeuge, Schiffe oder Luftfahrzeuge dar.

Als meist bevorzugte Anwendung ist das Verglasen von Transportmitteln, insbesondere von Strassen- und Schienenfahrzeugen, zu nennen.

### Beispiele

Es wurden unterschiedliche Zusammensetzungen bestehend aus den Inhaltsstoffen in Gewichtsteilen gemäss den Angaben in Tabelle 1 hergestellt. Die Zusammensetzungen ***Ref1***, ***Ref2*** und ***Ref3*** stellen Vergleichsbeispiele dar.

### Verwendete Rohstoffe:

- *"A189"*: 3-Mercaptopropyl-trimethoxysilan
Silquest® A189, GE Silicones, Schweiz
- *"A1170"*: Bis(trimethoxysilylpropyl)amin
Silquest® A1170, GE Silicones, Schweiz
- *"NPAPTS"*: N-Phenyl-3-Aminopropyl-trimethoxysilan,
Sigma-Aldrich Chemie GmbH, Schweiz
- *"GT 7071"*: Araldite® GT 7071,
Huntsman International, LLC, USA

### Herstellung der Zusammensetzungen

Gemäss den Mengen in der Tabelle 1 wurden für die Zusammensetzungen die Lösungsmittel zusammen mit den gegebenenfalls vorhandenen weiteren Inhaltsstoffen bei 23 °C unter Ausschluss von Luftfeuchtigkeit vermischt. Das Epoxid-Festharz Araldite® GT 7071 wurde vor Zugabe zu einer Zusammensetzung in 1 Teil Ethylacetat pro 3 Teilen Araldite® GT 7071 gelöst und für 12 Stunden auf einer Rollbank gemischt.

**Tabelle 1 Inhaltsstoffe der Zusammensetzungen in Gewichtsteilen.**

| **Inhaltsstoffe** | ***1*** | ***2*** | ***3*** | ***4*** | ***5*** | ***Ref1*** | ***Ref2*** | ***Ref3*** |
|---|---|---|---|---|---|---|---|---|
| *A-189* | 1.4 | 1 | 0.6 | 1.4 | 1.4 | 1.4 | 1.4 | 1.4 |
| *A-1170* | 3.5 | 2.6 | 1.5 | 3.5 | 3.5 | 3.5 | 3.5 | - |
| *NPAPTS* | - | - | - | - | 0.4 | - | - | - |
| *GT 7071* | 3.6 | 2.6 | 1.6 | 3.6 | 3.6 | - | - | 3.6 |
| Ethylacetat | 61.5 | 63.8 | 66.3 | 1.2 | 61.1 | - | 65.1 | 65 |
| Methylethylketon | - | - | - | 60.3 | - | - | - | - |
| Heptan | - | - | - | - | - | 65.1 | - | - |
| Summe | 70 | 70 | 70 | 70 | 70 | 70 | 70 | 70 |

### Testverfahren

### Applikation und Aushärtung

Für die Versuche in Tabelle 2 und 3 wurden die Zusammensetzungen jeweils auf dem Substrat im so genannten "wipe on/off"-Verfahren mittels eines Wischtuchs (Tela^{®}, Tela-Kimberly Switzerland GmbH) appliziert.

Als Substrate verwendet wurden:
- Glaskeramik, Heckscheibe eines Mercedes Benz, Daimler AG, S-Klasse, BR 221, PPG, (*"Sub1"*),
- Glaskeramik, Heckscheibe eines Mercedes Benz, Daimler AG, E-Klasse, BR 211, PPG, (*"Sub2"*).
- Glaskeramik, Heckscheibe eines Mercedes Benz, Daimler AG, E-Klasse, Kombi BR 211, PPG, (*"Sub3"*),
- Glaskeramik, Heckscheibe eines Mercedes Benz, Daimler AG, C-Klasse, BR 203, PPG, (*"Sub4"*).
- Standard Flachglas, Sn-Seite, Rocholl GmbH, Deutschland, (*"Glas"*).

Nach 10 Minuten Ablüftzeit wurden die Klebstoffe als Rundraupe mit einer Kartuschenpresse und einer Düse auf die mit Zusammensetzung beschichtete Substratoberfläche aufgetragen. Die Klebstofftemperatur bei der Applikation lag bei 60°C.

Als Klebstoff wurden die einkomponentigen Polyurethanklebstoffe Sikaflex^{®}-250 DM-2 (*"DM2"*), beziehungsweise Sikaflex^{®}-250 DM-3 (*"DM3"*), beziehungsweise Sikaflex^{®}-250 DM-5 (*"DM5"*) verwendet, welche von Sika Schweiz AG kommerziell erhältlich sind.

In Tabelle 3 wurde zu Sikaflex^{®}-250 DM-5 2 Volumenprozent Sika^{®} Booster Paste (Sika Schweiz AG) homogen eingemischt (*"DM5B"*)*.*

Anschliessend wurde der Klebstoff während 7 Tagen bei 23 °C und 50% relativer Luftfeuchtigkeit (Raumtemperatur-Klimalagerung: "KL") ausgehärtet und es wurde ein Drittel der Raupe mittels unten beschriebenen Haftungstest getestet. Danach wurde die Probe während weiteren 7 Tagen ins Wasser bei 23 °C gelegt (Wasserlagerung: "WL"). Anschliessend wurde die Haftung durch den Raupentest für ein weiteres Drittel der Raupe getestet. Daraufhin wurden die Substrate einem Cataplasmaklima von 100% relativer Luftfeuchtigkeit und 70 °C ("CL"), ausgesetzt und danach die Haftung des letzten Drittels der Raupe ermittelt.

### Haftungstest ("Raupentest")

Die Haftung des Klebstoffes wurde mittels 'Raupentest' getestet. Hierbei wird am Ende der Raupe knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie durch Plazieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen des kohäsiven Anteils der Haftfläche:
1 = > 95% Kohäsionsbruch
2 = 76 - 95% Kohäsionsbruch
3 = 25 - 75% Kohäsionsbruch
4 = < 25% Kohäsionsbruch
5 = 0% Kohäsionsbruch (rein adhäsiver Bruch).

**Tabelle 2 Haftungsresultate nach unterschiedlichen Lagerungen.**

| | | | | | | | | | | | | | | | | |
|---|---|---|---|---|---|---|---|---|---|---|---|---|---|---|---|---|
| | | ***1*** | | | ***2*** | | | ***3*** | | | ***4*** | | | ***5*** | | |
| Substrat | Klebstoff | KL | WL | CL | KL | WL | CL | KL | WL | CL | KL | WL | CL | KL | WL | CL |
| *Sub1* | *DM2* | 1 | 1 | 1 | 2 | 3 | 1 | 1 | 3 | 1 | 1 | 1 | 1 | 3 | 3 | 1 |
| | *DM5* | 1 | 1 | 1 | 1 | 1 | 1 | 1 | 2 | 1 | 1 | 1 | 1 | 1 | 1 | 1 |
| | | ***Ref1*** | | | ***Ref2*** | | | ***Ref3*** | | | | | | | | |
| Substrat | Klebstoff | KL | WL | CL | KL | Wl | CL | KL | WL | CL | | | | | | |
| *Sub1* | *DM2* | 3 | 5 | 2 | 3 | 4 | 5 | 5 | 5 | 5 | | | | | | |
| | *DM5* | 2 | 4 | 1 | 1 | 3 | 1 | 5 | 5 | 5 | | | | | | |

**Tabelle 3 Haftungsresultate nach unterschiedlichen Lagerungen.**

| | | ***1*** | | | ***Ref1*** | | |
|---|---|---|---|---|---|---|---|
| Substrat | Klebstoff | KL | WL | CL | KL | WL | CL |
| *Sub2* | *DM3* | 1 | 2 | 1 | 1 | 4 | 1 |
| | *DM5B* | 1 | 2 | 1 | 4 | 5 | 1 |
| *Sub3* | *DM3* | 1 | 1 | 2 | 2 | 3 | 1 |
| | *DM5B* | 1 | 1 | 1 | 4 | 4 | 1 |
| *Sub4* | *DM2* | 1 | 1 | 1 | 1 | 3 | 1 |
| *Glas* | *DM2* | 1 | 1 | 1 | 2 | 3 | 1 |

## Patentansprüche

1. Zusammensetzung enthaltend mindestens ein Reaktionsprodukt, welches erhalten wird aus einer Reaktionsmischung
umfassend
i) mindestens ein Mercaptosilan **MS;**
sowie
ii) mindestens ein Polysilan **PS;**
sowie
iii) mindestens ein Epoxidharz **EP.**

2. Zusammensetzung gemäss Anspruch 1, **dadurch gekennzeichnet, dass** das Polysilan **PS** mindestens eine sekundäre oder tertiäre Aminogruppe, insbesondere eine sekundäre Aminogruppe, aufweist.

3. Zusammensetzung gemäss einem der vorhergehenden Ansprüche, **dadurch gekennzeichnet, dass** das Epoxidharz **EP** ein Epoxid-Equivalenzgewicht (EEW) von 300 g/eq - 2000 g/eq, insbesondere 400 g/eq -1000 g/eq, aufweist.

4. Zusammensetzung gemäss einem der vorhergehenden Ansprüche, **dadurch gekennzeichnet, dass** der Gewichtsanteil des in der Reaktionsmischung eingesetzten Epoxidharzes **EP** 15 - 70 Gew.-%, insbesondere 20 - 60 Gew.-%, bevorzugt 30 - 50 Gew.-%, am Gewicht der Reaktionsmischung beträgt.

5. Zusammensetzung gemäss einem der vorhergehenden Ansprüche, **dadurch gekennzeichnet, dass** die Zusammensetzung weiterhin mindestens ein Lösungsmittel, insbesondere Kohlenwasserstoffe oder Ketone oder Carbonsäureester oder Alkohole enthält, insbesondere in einer Menge von 40 - 99 Gew.-%, bevorzugt von 60 - 95 Gew.-%, bezogen auf das Gewicht der Zusammensetzung.

6. Zusammensetzung gemäss einem der vorhergehenden Ansprüche, **dadurch gekennzeichnet, dass** die Zusammensetzung zusätzlich mindestens ein Silan oder mindestens eine Organo-Titanverbindung als Haftvermittler, insbesondere in einer Menge von 0.1 - 10 Gew.-%, bevorzugt von 1 - 5 Gew.-%, bezogen auf das Gewicht der Zusammensetzung, enthält.

7. Zusammensetzung gemäss einem der vorhergehenden Ansprüche, **dadurch gekennzeichnet, dass** das Verhältnis der Anzahl der in der Reaktionsmischung eingesetzten Epoxidgruppen zu der Summe der Anzahl der in der Reaktionsmischung eingesetzten Mercapto- und Aminogruppen ≤ 1 ist.

8. Zusammensetzung gemäss einem der vorhergehenden Ansprüche, **dadurch gekennzeichnet, dass** das molare Verhältnis aller in der Reaktionsmischung eingesetzten Mercaptosilane **MS** zu allen in der Reaktionsmischung eingesetzten Polysilane PS von 0.1 - 10, insbesondere von 0.3 - 5, bevorzugt von 0.5 - 2, beträgt.

9. Verwendung einer Zusammensetzung gemäss einem der Ansprüche 1 bis 8 als Haftvoranstrich für ein Substrat **S1.**

10. Verwendung gemäss Anspruch 9, **dadurch gekennzeichnet, dass** das Substrat **S1** Glas oder Glaskeramik ist.

11. Verfahren zum Verkleben oder zum Abdichten von zwei Substraten **S1** und **S2,** welches mindestens die folgenden Schritte aufweist
a) Applizieren einer Zusammensetzung, gemäss einem der Ansprüche 1 bis 8, auf ein erstes Substrat **S1;**
b) Applizieren eines Klebstoffs oder Dichtstoffs auf die abgelüftete nach Schritt a) applizierte Zusammensetzung;
c) Kontaktieren des Klebstoffs oder Dichtstoffs mit einem zweiten Substrat **S2;**
oder
a') Applizieren einer Zusammensetzung, gemäss einem der Ansprüche 1 bis 8, auf ein erstes Substrat **S1;**
b') Applikation eines Klebstoffs oder Dichtstoffs auf die Oberfläche eines zweiten Substrates **S2;**
c') Kontaktieren des Klebstoffs oder Dichtstoffs mit der abgelüfteten Zusammensetzung, welche sich auf dem Substrat **S1** befindet;
oder
a") Applizieren einer Zusammensetzung, gemäss einem der Ansprüche 1 bis 8, auf ein erstes Substrat **S1;**
b") Applizieren eines Klebstoffs oder Dichtstoffs auf das erste Substrat **S1** und zweite Substrat **S2,** auf welche zumindest eines davon nach Schritt a") eine Zusammensetzung appliziert worden ist;
c") Kontaktieren der applizierten Klebstoffe oder Dichtstoffe miteinander unter Fügen der Substratteile zu einem Klebverbund oder Dichtverbund;
oder
a"') Applizieren einer Zusammensetzung, gemäss einem der Ansprüche 1 bis 8, auf ein erstes Substrat **S1;**
b"') Ablüften der Zusammensetzung;
c"') Applikation eines Klebstoffs oder Dichtstoffs zwischen die Oberflächen des Substrates **S1** und **S2;**
wobei das zweite Substrat **S2** aus demselben oder unterschiedlichem Material wie das Substrat **S1** besteht.

12. Verfahren gemäss Anspruch 11, **dadurch gekennzeichnet, dass** mindestens eines der Substrate **S1** oder **S2** Glas oder Glaskeramik ist.

13. Verfahren gemäss Anspruch 11, **dadurch gekennzeichnet, dass** das Substrat **S1,** respektive **S2,** Glas oder Glaskeramik ist und dass das Substrat **S2,** respektive **S1,** ein Lack oder ein lackiertes Metall oder eine lackierte Metalllegierung ist.

14. Artikel zu dessen Herstellung ein Verfahren gemäss einem der Ansprüche 11 bis 13 durchgeführt wird.

15. Artikel gemäss Anspruch 14, **dadurch gekennzeichnet, dass** der Artikel ein Transportmittel, insbesondere ein Automobil, Bus, Lastkraftwagen, Schienenfahrzeug, ein Schiff oder ein Luftfahrzeug ist.

## Claims

1. Composition comprising at least one reaction product obtained from a reaction mixture comprising
i) at least one mercaptosilane **MS;**
and
ii) at least one polysilane **PS;**
and
iii) at least one epoxy resin **EP.**

2. Composition according to Claim 1, **characterized in that** the polysilane **PS** has at least one secondary or tertiary amino group, in particular a secondary amino group.

3. Composition according to either of the preceding claims, **characterized in that** the epoxy resin **EP** has an epoxide equivalent weight (EEW) of 300 g/eq - 2000 g/eq, in particular 400 g/eq - 1000 g/eq.

4. Composition according to any one of the preceding claims, **characterized in that** the weight fraction of the epoxy resin **EP** used in the reaction mixture is 15% - 70% by weight, in particular of 20% - 60% by weight, preferably 30% - 50% by weight, based on the weight of the reaction mixture.

5. Composition according to any of the preceding claims, **characterized in that** the composition further comprises at least one solvent, more particularly hydrocarbons or ketones or carboxylic esters or alcohols, in particular in an amount of 40% - 99% by weight, preferably of 60% - 95% by weight, based on the weight of the composition.

6. Composition according to any of the preceding claims, **characterized in that** the composition further comprises at least one silane or at least one organotitanium compound as adhesion promoter, in particular in an amount of 0.1% - 10% by weight, preferably of 1% - 5% by weight, based on the weight of the composition.

7. Composition according to any of the preceding claims, **characterized in that** the ratio of the number of epoxide groups used in the reaction mixture to the sum of the number of mercapto groups and amino groups used in the reaction mixture is ≤ 1.

8. Composition according to any of the preceding claims, **characterized in that** the molar ratio of all of the mercaptosilanes **MS** used in the reaction mixture to all of the polysilanes **PS** used in the reaction mixture is from 0.1 - 10, in particular from 0.3 - 5, preferably from 0.5 - 2.

9. Use of a composition according to any of claims 1 to 8 as an adhesion undercoat for a substrate **S1.**

10. Use according to Claim 9, **characterized in that** the substrate **S1** is glass or glass ceramic.

11. Method of adhesively bonding or sealing two substrates **S1** and **S2** which comprises at least the following steps:
a) applying a composition according to any of Claims 1 to 8 to a first substrate **S1;**
b) applying an adhesive or sealant to the flashed-off composition applied as per step a);
c) contacting the adhesive or sealant with a second substrate **S2;**
or
a') applying a composition according to any of Claims 1 to 8 to a first substrate **S1;**
b') applying an adhesive or sealant to the surface of a second substrate **S2;**
c') contacting the adhesive or sealant with the flashed-off composition located on the substrate **S1;**
or
a") applying a composition according to any of Claims 1 to 8 to a first substrate **S1;**
b") applying an adhesive or sealant to the first substrate **S1** and second substrate **S2,** to which at least one thereof as per step a") a composition has been applied;
c") contacting the applied adhesives or sealants with one another while assembling the substrate parts to form an adhesively bonded assembly or sealed assembly;
or
a"') applying a composition according to any of Claims 1 to 8 to a first substrate **S1;**
b"') flashing off the composition;
c"') applying adhesive or sealant between the surfaces of the substrates **S1** and **S2;**
the second substrate **S2** being composed of the same or different material to the substrate **S1.**

12. Method according to Claim 11, **characterized in that** at least one of the substrates, **S1** or **S2,** is glass or glass ceramic.

13. Method according to Claim 11, **characterized in that** the substrate **S1,** or **S2,** is glass or glass ceramic and **in that** the substrate **S2,** or **S1,** respectively, is a coating material or a coated metal or a coated metal alloy.

14. Article produced by a method according to any of Claims 11 to 13.

15. Article according to Claim 14, **characterized in that** the article is a means of transport, more particularly a car, bus, lorry, rail vehicle, boat or aircraft.

## Revendications

1. Composé contenant au moins un produit de réaction qui est obtenu à partir d'un mélange de réaction,
comprenant
i) au moins un mercaptosilane **MS ;**
ainsi que
ii) au moins un polysilane **PS ;** ainsi que
iii) au moins une résine époxy **EP.**

2. Composé selon la revendication 1, **caractérisé en ce que** le polysilane **PS** comporte au moins un groupe amine secondaire ou tertiaire, notamment un groupe amine secondaire.

3. Composé selon l'une des revendications précédentes, **caractérisé en ce que** la résine époxy **a** un poids équivalent en époxy de 300 g/eq à 2 000 g/eq, notamment de 400 g/eq à 1 000 g/eq.

4. Composé selon l'une des revendications précédentes, **caractérisé en ce que** la proportion pondérale de la résine époxy **EP** utilisée dans le mélange de réaction est de 15 à 70 % en poids, notamment de 20 à 60 % en poids, de préférence de 30 à 50 % en poids, par rapport au poids du mélange de réaction.

5. Composé selon l'une des revendications précédentes, **caractérisé en ce que** le composé contient en outre au moins un solvant, notamment des hydrocarbures, des cétones, des esters d'acide carboxylique ou des alcools, notamment dans une proportion de 40 à 99 % en poids, de préférence de 60 à 95 % en poids, par rapport au poids du composé.

6. Composé selon l'une des revendications précédentes, **caractérisé en ce que** le composé contient en outre au moins un silane ou au moins une liaison d'organo-titane commue agent d'accrochage, notamment dans une proportion de 0,1 à 10 % en poids, de préférence de 1 à 5 % en poids, par rapport au poids du composé.

7. Composé selon l'une des revendications précédentes, **caractérisé en ce que** le rapport du nombre des groupes époxy utilisés dans le mélange de réaction à la somma des nombres des groupes mercapto et amino utilisés dans le mélange de réaction est ≤ 1.

8. Composé selon l'une des revendications précédentes, **caractérisé en ce que** le rapport molaire de tous les mecaptosilanes **MS** utilisés dans le mélange de réaction à tous les polysilanes **PS** utilisés dans le mélange de réaction est de 0,1 à 10, notamment de 0,3 à 5, de préférence de 0,5 à 2.

9. Utilisation d'un composé selon l'une des revendications 1 à 8 commue couche d'accrochage pour un substrat **S1.**

10. Utilisation selon la revendication 9, **caractérisée en ce que** le substrat **S1** est du verre ou de la vitrocéramique.

11. Procédé pour coller ou êtanchéîfier deux substrats **S1** et **S2,** qui comporte au moins les étapes suivantes
a) application d'un composé selon l'une des revendications 1 à 8 sur un premier substrat **S1 ;**
b) application d'un produit adhésif ou d'un produit d'étanchéité sur le composé appliqué selon l'étape a) et débarrassé de son air ;
c) mise en contact du produit adhésif ou du produit d'étanchéité avec un second substrat **S2 ;**
ou
a') application d'un composé selon l'une des revendications 1 à 8 sur un premier substrat **S1 ;**
b') application d'un produit adhésif ou d'un produit d'étanchéité sur la surface d'un second substrat **S2 ;**
c') mise en contact du produit adhésif ou du produit d'étanchéité avec le composé débarrassé de son air qui se trouve sur le substrat **S1 ;**
ou
a'') application d'un composé selon l'une des revendicatîons 1 à 8 sur un premier substrat **S1 ;**
b'') application d'un produit adhésif ou d'un produit d'étanchéité sur le premier substrat **S1** et sur le second substrat **S2,** un composé ayant été appliqué sur au moins l'un des deux selon l'étape a'') ;
c") mise en contact des produits adhésifs ou d'étanchéité appliqués les uns avec les autres avec assemblage des parties de substrats pour former un composite adhésif ou d'étanchéité ;
ou
a''') application d'un composé selon l'une des revendications 1 à 8 sur un premier substrat **S1 ;**
b''') évacuation de l'air du composé ;
c''') application d'un produit adhésif ou d'un produit d'étanchéité entre les surfaces des substrats **S1** et S**2 ;**
le second substrat **S2** et le substrat **S1** étant constitués d'une matière identique ou différente.

12. Procédé selon la revendication 11, **caractérisé en ce qu'**au moins l'un des substrats **S1** ou **est** du verre ou de la vitrocéramique.

13. Procédé selon la revendication 11, **caractérisé en ce que** le substrat **S1,** respectivement **S2,** est du verre ou de la vitrocéramique et **en ce que** le substrat **S2,** respectivement **S1,** est une laque ou un métal laqué ou un alliage métallique laqué.

14. Article pour la fabrication duquel un procédé selon l'une des revendications 11 à 13 a été mis en oeuvre.

15. Article selon la revendication 14, **caractérisé en ce que** l'article est un moyen de transport, notamment un véhicule automobile, un bus, un camion, un véhicule ferroviaire, un bateau ou un avion.
